# FASCICULE DE BREVET EUROPEEN

(11) **EP 1 545 163 B1**
(45) Date de publication et mention de la délivrance du brevet: **09.01.2008**
(21) Numéro de dépôt: 04292876.2
(22) Date de dépôt: 03.12.2004
(51) Int. Cl.: H05B 33/08, B60Q 1/04

(54) **Dispositif d'alimentation électrique pour diodes électroluminescentes, et projecteur lumineux comportant un tel dispositif**
Elektrische Stromversorgungseinrichtung für Leuchtdioden und Scheinwerfer, der eine solche Stromversorgungseinrichtung enthält
Electric power supply device for light emitting diodes and light projector comprising such a device

(30) Priorité: 19.12.2003 FR 0315114
(43) Date de publication de la demande: 22.06.2005
(73) Titulaire: VALEO VISION, 93012 Bobigny Cédex (FR)
(72) Inventeur: Albou, Pierre, 75013 Paris (FR)
(74) Mandataire: Renous Chan, Véronique

(56) Documents cités:
- EP-A- 1 006 506
- DE-A- 10 103 611
- DE-A- 19 841 490
- US-A- 5 459 328
- US-A- 6 153 980

## Description

L'invention est relative à un dispositif d'alimentation électrique pour diodes électroluminescentes montées en série, en particulier pour fonction d'éclairage, comportant une source de courant commune à toutes les diodes électroluminescentes.

Par la suite une diode électroluminescente sera désignée par l'abréviation LED.

Pour réaliser une fonction d'éclairage, notamment un projecteur code ou route de véhicule automobile, il faut utiliser plusieurs LEDs, par exemple une dizaine, pour obtenir un flux lumineux suffisant.

Compte tenu de la tension de fonctionnement d'une LED, notamment d'environ 3,3 V, une solution consiste à alimenter deux ou trois LEDs en série sous la tension continue de 12 V classique pour un véhicule. Une résistance d'équilibrage est généralement nécessaire car la tension de fonctionnement d'une LED peut varier. Un tel montage est très sensible à la dispersion sur tension directe ; le courant risque de ne pas être convenable de sorte que le dimensionnement doit être fait au pire cas, et en général le courant est trop faible et les diodes sont sous-employées. Ainsi certaines des LEDs risquent de fonctionner au-dessous de leur optimum. En outre, si une LED grille, le circuit s'ouvre et toutes les autres LEDs s'éteignent.

Pour des LEDs de puissance, par exemple de 1 ou 2 watts, l'alimentation électrique comporte de préférence une régulation en courant car une LED supporte mal une surintensité qui entraîne une diminution sensible de sa durée de vie. En l'absence d'une telle alimentation en courant régulé, aucune garantie du fabricant de LEDs ne peut être obtenue.

Ainsi, lorsque les LEDs sont prévues en plusieurs groupes d'un petit nombre de diodes, par exemple 2 ou 4 par groupe, il faut un régulateur de courant sur chaque groupe, ce qui est une solution coûteuse. Le brevet US 5, 459,328 décrit un dispositif d'alimentation électrique pour diodes électroluminescentes montées en série.

On connaît également des alimentations comportant une source de courant par LED, avec découpage avec une résistance ballast, le tout alimenté par un abaisseur commun rapprochant la tension d'alimentation - avant les résistances - de la tension nominale directe des LEDs.

Les solutions antérieures présentent l'inconvénient d'exiger un convertisseur par LED en plus d'un convertisseur amont. Le rendement est en principe dégradé pour les raisons suivantes :
- un abaisseur faible tension (de l'ordre de 4 V pour des diodes InGaN) est toujours peu efficace (fort courant dans les composants) ;
- la dispersion des tensions directes des LEDs est compensée par des résistances, ou en utilisant des courants instantanés supérieurs au courant nominal. Cette dispersion est importante pour les LEDs de puissance actuellement en production (3 à 4 V pour des LEDs InGaN).

L'invention a pour but, surtout, de fournir un dispositif qui permet:
- d'alimenter des LEDs, dans une fonction à plusieurs LEDs de puissance, notamment une fonction d'éclairage automobile, dans les conditions optimales recommandées par les fabricants (c'est-à-dire à courant nominal), à un coût raisonnable,
- d'assurer que la perte d'une des LEDs, qui grille et passe en circuit ouvert, ne provoque aucune modification du fonctionnement des autres LEDs et n'entraîne donc pas l'extinction de l'ensemble.

Selon l'invention, un dispositif d'alimentation électrique pour LEDs montées en série, du genre défini précédemment, est caractérisé en ce qu'il comporte, pour chaque LED, un moyen sensible à la tension aux bornes de la LED, ce moyen étant non conducteur lorsque la LED est en état de fonctionnement, et étant propre à passer en court-circuit de manière irréversible lorsque la tension aux bornes de la LED dépasse une limite prédéterminée.

Ce moyen sensible peut comprendre un circuit réalisé avec un transistor qui est bloqué, lorsque la LED est en état de fonctionnement, par une liaison entre base et émetteur, cette liaison étant rompue lorsque la LED n'est plus en état de fonctionnement. La liaison peut être assurée par un fusible, en particulier constitué par une diode de signal qui n'admet que des courants très faibles, et qui grille lorsque la tension aux bornes de la LED s'élève par suite du non-fonctionnement de cette LED.

En variante, le fusible peut être constitué par un fusible calibré.

Le dispositif est prévu pour que le fusible soit traversé en permanence par un courant de polarisation du transistor qui provient d'un branchement sur un étage voisin de LED.

La détection de tension aux bornes d'une LED peut être assurée avec une diode Zener de telle sorte que, lorsque la LED grille, la tension aux bornes de cette LED dépasse la tension de Zener et le courant qui traverse la Zener a une intensité supérieure à celle admissible par le fusible, ce qui provoque la rupture de ce dernier.

Une diode anti-fuite peut être prévue pour empêcher que le courant de polarisation remonte par la diode Zener au lieu de passer de la base vers l'émetteur du transistor.

Lorsque le fusible est constitué par une diode faisant intervenir une tension résiduelle, une diode Vd peut être prévue pour constituer une compensation et empêcher un passage de courant par la base du transistor.

Dans un dispositif comportant n+1 LEDs en série, auxquelles correspondent n+1 étages (de 0 à n), le circuit à transistor de chaque étage correspondant aux LEDs 0 à n-1 comporte un transistor de type donné NPN, et la polarisation de la base par rapport à l'émetteur est obtenue à partir de l'étage supérieur. Pour le dernier étage correspondant à la LED Ln, du fait qu'on ne peut obtenir une polarisation par un étage supérieur, on choisit une solution duale et on prévoit un circuit avec un transistor de l'autre type PNP qui fonctionne avec des tensions inversées ; la tension de polarisation de ce transistor PNP de l'étage à LED Ln est prélevée sur l'émetteur du transistor de l'étage inférieur à LED Ln-1.

En variante, on peut inverser les types de transistor, auquel cas les étages des LEDs L1 à Ln sont assurés par un transistor de type PNP et l'étage de la LED L0 est assuré par un transistor de type NPN, les branchements de polarisation étant prévus en conséquence.

A la place du circuit faisant intervenir un transistor bloqué qui passe à l'état conducteur lorsque la LED grille, on peut utiliser un composant du type anti-fusible qui est non conducteur en fonctionnement normal et qui passe en court-circuit sous l'effet d'une surtension.

Selon une autre variante, le circuit à transistor peut être intégré sous forme de circuit logique avec un transistor MOS qui ne consomme pratiquement pas de courant. La tension aux bornes de la LED est appliquée à une entrée d'un comparateur dont l'autre entrée est branchée sur une référence de tension. La sortie du comparateur commande une bascule dont la sortie commande la grille du transistor MOS. Une alimentation flottante est prévue dont la borne moins est à une tension autre que celle de la borne moins générale.

On peut prévoir un convertisseur élévateur de tension continue/continue avec une commande de la tension de sortie en fonction de l'intensité qui circule dans les LEDs pour réaliser une régulation de courant. Le signal de commande est pris aux bornes d'une résistance montée en série avec les LEDs.

L'invention concerne également un dispositif lumineux pour véhicule automobile tel que projecteur d'éclairage ou feu de signalisation, comportant plusieurs diodes électroluminescentes branchées en série et un dispositif d'alimentation électrique tel que défini précédemment. De préférence, le dispositif lumineux selon l'invention comporte dix diodes électroluminescentes branchées en série.

L'invention consiste, mises à part les dispositions exposées ci-dessus, en un certain nombre d'autres dispositions qui résulteront de la description détaillée qui suit avec référence aux dessins annexés, mais qui n'est nullement limitative. Sur ces dessins :
Fig.1 est un schéma d'un dispositif d'alimentation de LEDs en série, selon l'invention.
Fig.2 est un schéma synoptique du dispositif de Fig.1.
Fig.3 est un schéma simplifié d'une source de courant avec convertisseur de tension continue / continue et régulation, et
Fig.4 est un schéma d'un circuit logique avec transistor MOS pour réaliser la fonction anti-fusible.

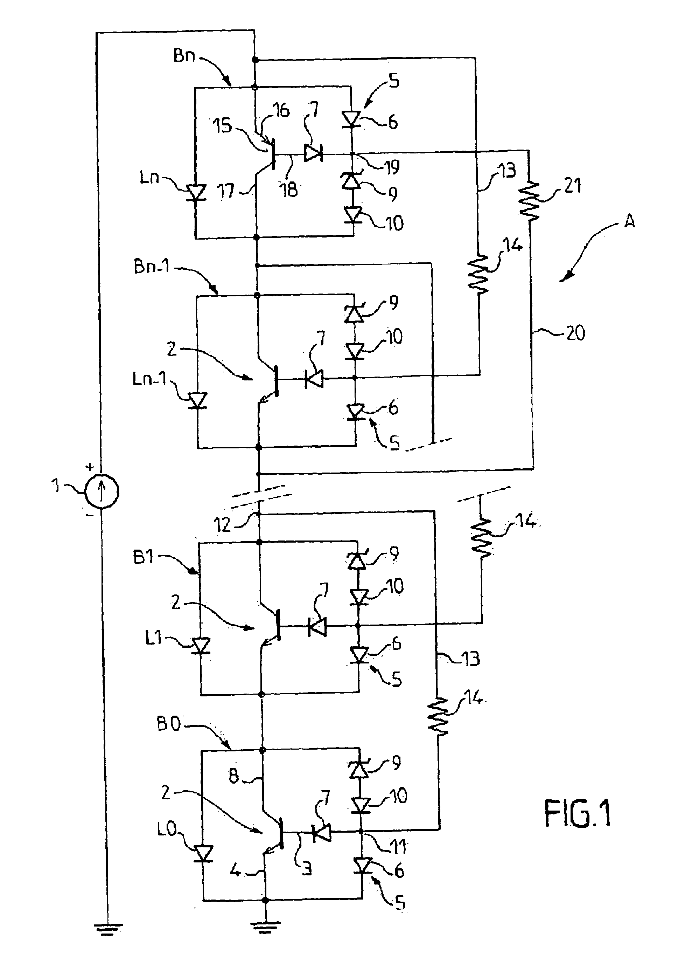

En se reportant à Fig.1, on peut voir un dispositif d'alimentation électrique A pour LEDs (diodes électroluminescentes) L0, L1, ...Ln-1, Ln.

Quatre LEDs ont été représentées. Un étage correspond à chaque LED. Un nombre variable d'étages identiques aux étages des LEDs L0, L1... Ln-1 sont prévus. Les LEDs L0...Ln sont branchées en série entre la borne + d'une source de courant continu 1 et la masse à laquelle est reliée la borne - de la source 1.

Pour réaliser un projecteur automobile code ou route, on prévoit avantageusement une dizaine de LEDs montées en série. Dans le cas où chaque LED fonctionne sous une tension de 4 V ( cas d'une LED à lumière blanche) la tension totale nécessaire pour la source 1 est de 40 V.

En l'absence du dispositif de l'invention, avec un montage série des LEDs, si une LED grille, il y a interruption du circuit et tout s'éteint.

Pour éviter cet inconvénient, le dispositif comporte pour chaque LED un circuit B0, B1, ... Bn avec un moyen (2,5,9 ;15,5,9) sensible à la tension aux bornes de la LED correspondante. Ce moyen n'est pas conducteur lorsque la LED est en état de fonctionnement et est propre à passer en court-circuit lorsque la tension aux bornes de la LED dépasse une limite prédéterminée. Ce dépassement de tension se produit lorsque la LED grille et passe en circuit ouvert.

Chaque moyen sensible (2,5,9) des LEDs L0...Ln-1 comprend un circuit réalisé avec un transistor 2 de type NPN qui est bloqué, lorsque la LED correspondante est en état de fonctionnement, par une liaison électrique entre base 3 et émetteur 4. Cette liaison électrique est assurée par un fusible 5 constitué, dans le cas de Fig.1, par une diode de signal 6 n'admettant que des courants très faibles, et qui grille pour des courants plus importants.

En variante, le fusible 5 pourrait être constitué par un fusible calibré plus coûteux toutefois que la diode de signal 6.

Lorsqu'une telle diode de signal 6 est utilisée comme fusible, une tension résiduelle existe entre les bornes de la diode 6. Pour empêcher un passage de courant par la base 3, une diode 7 est prévue dont la cathode est reliée à la base 3 et l'anode à celle de la diode 6.

Le collecteur 8 du transistor 2 est relié à l'anode de la LED L0. La détection de tension aux bornes de la LED L0 est assurée avec une diode Zener 9 dont la cathode est reliée au collecteur 8 et à l'anode de L0 Une diode anti-fuite 10 a son anode reliée à celle de la diode Zener 9. La cathode de la diode 10 est reliée aux anodes des diodes 6 et 7. Cette diode anti-fuite 10 empêche un courant de polarisation de remonter par la diode Zener 9 au lieu de passer de la base 3 vers l'émetteur 4 du transistor 2.

Les étages des LEDs L1 à Ln-1 sont réalisés de manière identique à l'étage de LED L0. Leurs composants identiques sont désignés par les mêmes références.

La polarisation de la base 3 d'un transistor 2 de type NPN doit être positive par rapport à l'émetteur pour que ce transistor conduise. Ainsi, la polarisation de la base 3 du transistor 2 de LED L0 est obtenue en reliant un point 11 commun aux anodes des diodes 6 et 7 et à un point 12 qui se trouve au potentiel de l'anode de la LED L1 de l'étage supérieur. La liaison est assurée par un conducteur 13 et une résistance 14 de polarisation.

En fonctionnement normal de la LED L0, le courant de polarisation s'écoule par le fusible 6 et la base 3 est pratiquement au même potentiel que l'émetteur 4 de sorte que le transistor 2 est bloqué.

Si la LED L0 grille et passe en circuit ouvert, la tension aux bornes de la LED L0 augmente et dépasse la tension de Zener de la diode Zener 9, par exemple 4 V. Un courant d'intensité plus forte va s'écouler dans la branche 9, 10 et 6, de sorte que la diode de signal 6 va griller. La liaison entre la base 3 et l'émetteur 4 est alors coupée et la tension de la base 3 par rapport à l'émetteur 4 va augmenter. Le transistor 2 passe à l'état conducteur de préférence saturé. Le circuit d'alimentation reste opérationnel pour les autres LEDs L1-Ln qui restent donc allumées.

Le circuit B0, du fait que le fusible 5 grille, passe en court-circuit de manière irréversible lorsque la tension aux bornes de la LED dépasse la limite prédéterminée.

Le même raisonnement s'applique à l'une quelconque des diodes L1...Ln-1 qui viendrait à claquer.

Pour le dernier étage du circuit correspondant à la LED Ln, on ne peut s'adresser à un étage supérieur pour assurer la polarisation de la base d'un transistor qui serait de type NPN, comme pour les étages inférieurs.

On choisit la solution duale pour ce dernier étage et on prévoit, comme moyen sensible à la tension aux bornes de la LED Ln, un circuit dual des circuits inférieurs. Le circuit comporte un transistor 15 de type PNP dont l'émetteur 16 est relié à la borne + de la source 1, dont le collecteur 17 est relié au collecteur du transistor 2 de l'étage inférieur et dont la base 18 est reliée à l'anode d'une diode 7, montée en sens inverse par rapport aux étages inférieurs. Le fusible 5 relie la cathode de la diode 7 à l'émetteur 16. Ce fusible 5 est avantageusement constitué par une diode de signal 6 dont l'anode est reliée à l'émetteur 16 et la cathode à un point 19 relié à la cathode de la diode 7.

La diode Zener 9 du dernier étage est montée avec sa cathode reliée au point 19 et son anode reliée à celle de la diode anti-fuite 10. La cathode de la diode 10 est reliée au collecteur 17. Le point 19 est relié, par une ligne 20 comportant une résistance 21, à l'émetteur du transistor 2 de l'étage immédiatement inférieur. Cette liaison 20 assure la polarisation négative de la base 18 par rapport à l'émetteur 16 lorsque le fusible 5 a grillé. Le transistor 15 devient ainsi conducteur lorsque la LED Ln a grillé.

Le fonctionnement du dispositif résulte des explications qui précèdent.

Lorsqu'une LED grille, ce qui correspond à un étage défaillant, le transistor 2, 15 de cet étage permet de court-circuiter la LED défaillante. La commande polarisée du transistor 2, 15 est prévue pour assurer la saturation du transistor. La polarisation de chaque circuit anti-fusible à transistor 2 par l'étage supérieur permet de réaliser un circuit complètement flottant.

L'utilisation d'une diode de signal 6 comme fusible permet un temps de réponse très rapide et une réalisation à faible coût.

La diode Zener 9 pourrait être remplacée par une résistance de type VDR (résistance dépendant de la tension).

La qualification des circuits à transistor 2, 15 comme composants anti-fusible s'explique par le fait qu'un fusible est conducteur en fonctionnement normal et se met en circuit ouvert en cas de surtension et de surintensité, alors qu'à l'inverse un circuit à transistor 2, 15 n'est pas conducteur en fonctionnement normal et se met en court-circuit en cas de surtension et surintensité. Les circuits à transistor peuvent être remplacés par un composant ayant le même comportement.

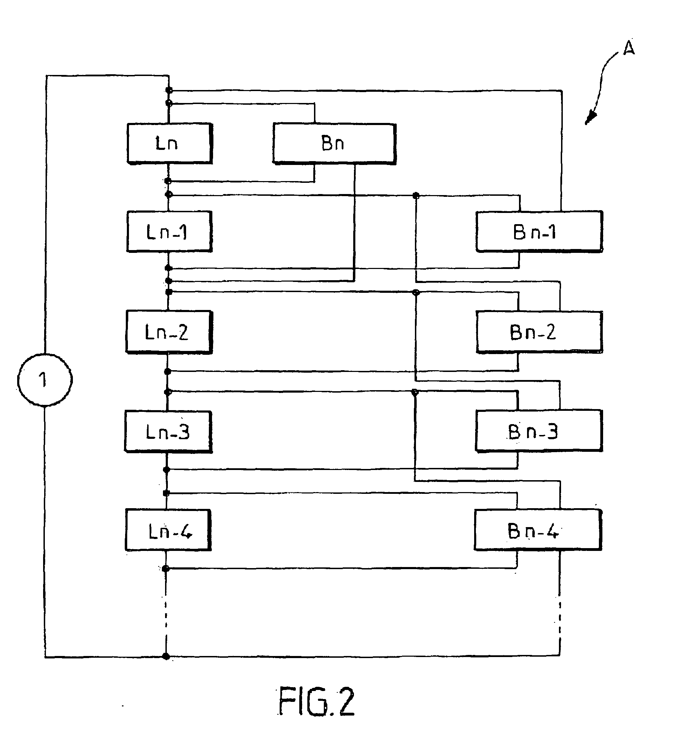

Fig.2 illustre sous forme synoptique, le schéma du dispositif de Fig.1, les références numériques de Fig.2 correspondant à celles de Fig.1.

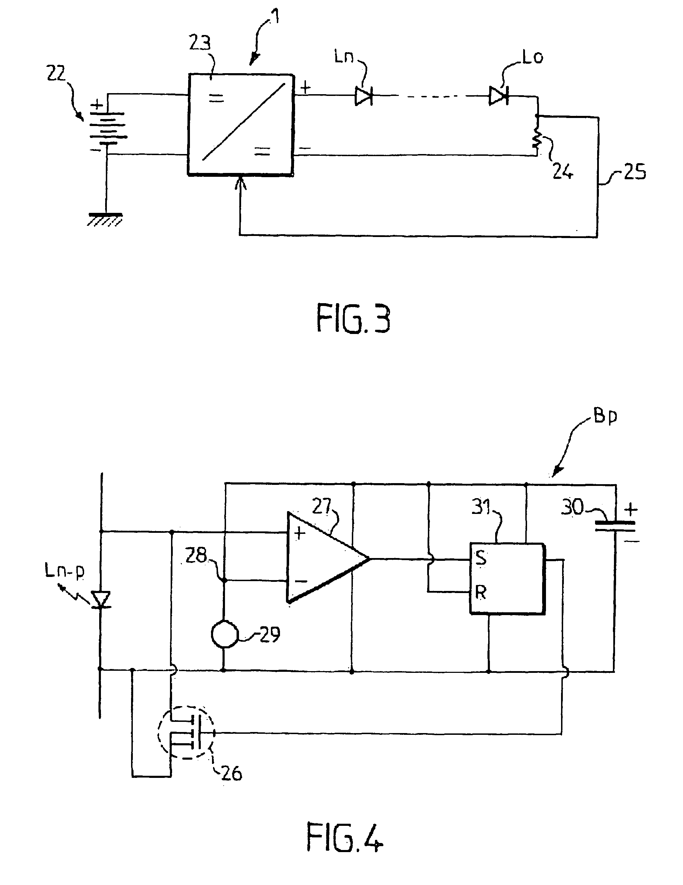

Fig.3 illustre une réalisation simple d'une source de courant régulée 1.

Cette source comprend une source de tension continue 22, par exemple la batterie du véhicule, délivrant une tension de 12 V. Un convertisseur élévateur de tension continue/continue 23 a ses bornes d'entrée reliées à celles de la source 22. La tension de sortie du convertisseur 23 est par exemple de 40V. La borne + de sortie du convertisseur 23 est reliée à l'anode de la LED Ln du dernier étage de la série. La LED L0 a sa cathode reliée à la borne - de sortie du convertisseur 23 par l'intermédiaire d'une résistance 24 en série qui permet de créer un signal de tension pour la régulation. Un signal de commande est prélevé par une ligne 25 aux bornes de la résistance 24. La ligne 25 fournit l'information à une entrée d'une régulation incorporée dans le convertisseur 23. La régulation permet de maintenir constante l'intensité du courant traversant les LEDs Ln...L0. Cette réalisation est simple.

En variante, les transistors des étages L1 à Ln pourraient être du type PNP, la base de chaque transistor étant polarisée à partir de l'étage inférieur, tandis que le premier étage de LED L0 comporterait un transistor NPN dont la base serait polarisée à partir de l'étage immédiatement supérieur de LED L1.

Fig.4 montre une variante de réalisation selon laquelle le circuit à transistor de Fig.1 pour une LED Ln-p est remplacé par un circuit logique Bp avec un transistor MOS 26 qui ne consomme pratiquement pas de courant.

Le circuit Bp comprend un comparateur 27 dont une entrée non inverseuse est reliée à l'anode de la LED Ln-p tandis qu'une entrée inverseuse est reliée à une borne 28 d'un élément 29 constituant une référence de tension, par exemple une diode Zener auquel cas il faut inclure une résistance de polarisation. L'autre borne de l'élément 29 est reliée à la cathode de la LED Ln-p. La borne 28 est également reliée à la borne + d'une alimentation flottante 30 dont la borne - est reliée à la cathode de la LED Ln-p. La sortie de l'amplificateur 27 est reliée à une entrée S d'une bascule 31 dont la sortie est reliée à la grille du transistor MOS 26. Une entrée R (remise à zéro) de la bascule 31 est reliée à la borne 28 ; en fait, l'entrée R n'est pas utilisée mais il faut s'assurer que l'état de la bascule est R lors de la mise sous tension, ce qui peut être obtenu, selon le type de bascule, par le branchement indiqué sur le schéma.

Le transistor MOS 26 a son drain relié à l'anode de la LED Ln-p et sa source reliée à la cathode de cette LED.

La tension aux bornes de la LED Ln-p est ainsi appliquée à une entrée du comparateur 27, dont l'autre entrée est branchée sur la référence de tension 29. Lorsque la tension aux bornes de la LED dépasse la tension de référence, le comparateur 27 fournit un signal sur sa sortie qui commande un changement d'état de la bascule 31. La sortie de cette bascule commande la grille du transistor 26 qui devient conducteur et court-circuite la LED Ln-p qui a grillé.

Un tel circuit permet une réinitialisation après remplacement d'une LED qui a grillé.

Dans l'exemple de réalisation de Fig.1, le transistor PNP pourrait être remplacé par un transistor MOS à canal p tandis que les transistors 2 de type NPN pourraient être remplacés par des transistors MOS à canal n. Par exemple, le transistor 2 pour la LED L0 serait remplacé par un transistor MOS dont la grille serait reliée directement au point 11, sans diode 7 ; le drain serait relié à l'anode de L0, et la source serait reliée à la cathode de L0. La diode Zener 9, la diode 10 et la diode 6 (fusible 5) seraient conservés selon le montage de Fig.1, le fusible étant prévu pour court-circuiter la grille et la source. De plus, une résistance serait branchée entre la grille et la source du transistor MOS ; une telle résistance permet, lorsque la LED L0 puis la diode 6 grillent, d'évacuer transitoirement le courant entre grille et source. Cette résistance a une valeur de préférence nettement supérieure à celle de la résistance 14.

L'invention permet une alimentation optimale, à courant constant, avec un circuit élévateur de tension ayant un bon rendement potentiel, une structure simple et peu coûteuse, sans composant ballast et ne provoquant pas de défaillances en cascade.

## Revendications

1. Dispositif d'alimentation électrique pour diodes électroluminescentes (L0...Ln) montées en série, en particulier pour fonction d'éclairage, comportant une source de courant (1) commune à toutes les diodes électroluminescentes et comportant, pour chaque LED, un moyen (2,5,9 ;15,5,9) sensible à la tension aux bornes de la LED (L0,L1,...Ln), ce moyen étant non conducteur lorsque la LED est e état de fonctionnement, et **caractérisé en ce que** ledit moyen est propre à passer en court-circuit de manière irréversible lorsque la tension aux bornes de la LED dépasse une limite prédéterminée.

2. Dispositif selon la revendication 1, **caractérisé en ce que** le moyen sensible (2,5,9 ;15,5,9) comprend un circuit réalisé avec un transistor (2, 15) qui est bloqué, lorsque la LED (L0,..Ln-1 ; Ln) est en état de fonctionnement, par une liaison (5) entre base (3;18) et émetteur (4;16), cette liaison étant rompue lorsque la LED n'est plus en état de fonctionnement.

3. Dispositif selon la revendication 2, **caractérisé en ce que** la liaison est assurée par un fusible (5).

4. Dispositif selon la revendication 3, **caractérisé en ce que** le fusible (5) est constitué par une diode de signal (6) .

5. Dispositif selon la revendication 4, **caractérisé en ce qu'**une diode (7) est prévue pour constituer une compensation et empêcher un passage de courant par la base du transistor.

6. Dispositif selon l'une des revendications 3 à 5, **caractérisé en ce que** le fusible (5) est traversé en permanence par un courant de polarisation du transistor (2, 15) qui provient d'un branchement sur un étage supérieur ou inférieur.

7. Dispositif selon l'une des revendications 3 à 6, **caractérisé en ce que** la détection de tension aux bornes d'une LED (L0, L1, ...Ln) est assurée avec une diode Zener (9) de telle sorte que, lorsque la LED grille, la tension aux bornes de cette LED dépasse la tension de Zener et le courant qui traverse la Zener (9) a une intensité supérieure à celle admissible par le fusible (5) ce qui provoque la rupture de ce dernier.

8. Dispositif selon la revendication 7, **caractérisé en ce qu**'une diode anti-fuite (10) est prévue pour empêcher le courant de polarisation de remonter par la diode Zener (9).

9. Dispositif selon l'une des revendications 2 à 8, **caractérisé en ce qu**'il comporte n+1 LEDs en série, auxquelles correspondent n+1 étages (de 0 à n), le circuit à transistor de chaque étage correspondant aux LEDs 0 à n-1 comporte un transistor (2) de type NPN, et la polarisation de la base (3) par rapport à l'émetteur (4) est obtenue à partir de l'étage supérieur, et pour le dernier étage (LED Ln), un circuit est prévu avec un transistor (15) de l'autre type PNP, la tension de polarisation de ce transistor PNP étant prélevée sur l'émetteur du transistor de l'étage inférieur (LED Ln-1).

10. Dispositif selon l'une des revendications 2 à 10, **caractérisé en ce que** les circuits à transistor sont réalisés sous une forme intégrée.

11. Dispositif selon l'une des revendications précédentes, **caractérisé en ce qu**'il comporte un convertisseur élévateur de tension continue/continue (23) avec une commande de la tension de sortie en fonction de l'intensité qui circule dans les LEDs pour réaliser une régulation de courant, le signal de commande étant pris aux bornes d'une résistance (24) montée en série avec les LEDs.

12. Dispositif lumineux pour véhicule automobile tel que projecteur d'éclairage ou feu de signalisation, comportant plusieurs diodes électroluminescentes branchées en série, **caractérisé en ce qu'**il comporte un dispositif d'alimentation électrique selon l'une des revendications précédentes.

13. Dispositif selon la revendication 12, **caractérisé en ce qu'**il comporte dix diodes électroluminescentes branchées en série.

## Claims

1. Electric supply device for electroluminescent diodes (L0...Ln) fitted in series, in particular for a lighting function, comprising a current source (1) which is common to all the electroluminescent diodes, and comprising for each LED a means (2, 5, 9; 15, 5, 9) which is sensitive to the voltage at the terminals of the LED (L0, L1, ...Ln), this means being non-conductive when the LED is in a functioning state, and **characterised in that** the said means can go into short-circuit irreversibly when the voltage at the terminals of the LED exceeds a predetermined limit.

2. Device according to claim 1, **characterised in that** the sensitive means (2, 5, 9; 15, 5, 9) comprises a circuit which is produced with a transistor (2, 15) which is blocked when the LED (L0, ...Ln-1; Ln) is in the functioning state, by means of a connection (5) between the base (3; 18) and emitter (4; 16), this connection being broken when the LED is no longer in the functioning state.

3. Device according to claim 2, **characterised in that** the connection is assured by means of a fuse (5).

4. Device according to claim 3, **characterised in that** the fuse (5) consists of a signal diode (6).

5. Device according to claim 4, **characterised in that** a diode (7) is provided in order to constitute compensation and prevent passage of current via the base of the transistor.

6. Device according to any one of claims 3 to 5, **characterised in that** there passes permanently through the fuse (5) a current for polarisation of the transistor (2, 15) which is obtained from a connection on an upper or lower stage.

7. Device according to any one of claims 3 to 6, **characterised in that** the detection of voltage at the terminals of an LED (L0, L1, ...Ln) is assured by means of a Zener diode (9) such that, when the LED burns out, the voltage at the terminals of this LED exceeds the Zener voltage and the current which passes through the Zener (9) has an intensity greater than that which is admissible by the fuse (5), thus making the latter fail.

8. Device according to claim 7, **characterised in that** an anti-leakage diode (10) is provided in order to prevent the polarisation current from rising by means of the Zener diode (9).

9. Device according to one of claims 2 to 8, **characterised in that** it comprises n+1 LEDs in series, to which there correspond n+1 stages (from 0 to n), the transistor circuit of each stage corresponding to the LEDs 0 to n-1 comprises a transistor (2) of the NPN type, and the polarisation of the base (3) relative to the emitter (4) is obtained from the upper stage, and for the final stage (LED Ln), a circuit is provided with a transistor (15) of the other type PNP, the polarisation of this transistor PNP being taken from the emitter of the transistor of the lower stage (LED Ln-1).

10. Device according to one of claims 2 to 10, **characterised in that** the transistor circuits are produced in an integrated form.

11. Device according to one of the preceding claims, **characterised in that** it comprises a direct/ direct voltage increaser-converter (23), with control of the output voltage according to the intensity which is circulating in the LEDs in order to provide current regulation, the control signal being taken from the terminals of a resistor (24) which is fitted in series with the LEDs.

12. Lighting device for a motor vehicle such as a lighting headlight or a signalling light, comprising a plurality of electroluminescent diodes which are connected in series, **characterised in that** it comprises an electric supply device according to one of the preceding claims.

13. Device according to claim 12, **characterised in that** it comprises ten electroluminescent diodes connected in series.

## Patentansprüche

1. Einrichtung zur elektrischen Stromversorgung für in Reihe geschaltete Leuchtdioden (L0...Ln), insbesondere für Scheinwerfer, mit einer allen Leuchtdioden gemeinsamen Stromquelle (1) und mit einem auf die Klemmenspannung der LED (L0, L1,...Ln) ansprechenden Mittel (2, 5, 9; 15, 5, 9) für jede LED, wobei dieses Mittel nicht leitend ist, wenn sich die LED im Betriebszustand befindet, und
**dadurch gekennzeichnet, dass** das Mittel irreversibel kurzgeschlossen zu werden vermag, wenn die Klemmenspannung der LED einen vorbestimmten Grenzwert überschreitet.

2. Einrichtung nach Anspruch 1,
**dadurch gekennzeichnet, dass** das ansprechende Mittel (2, 5, 9; 15, 5, 9) eine Schaltung umfasst, die mit einem Transistor (2, 15) realisiert ist, der durch eine Verbindung (5) zwischen Basis (3; 18) und Emitter (4; 16) gesperrt ist, wenn sich die LED (L0,...Ln-1 Ln) im Betriebszustand befindet, diese Verbindung jedoch getrennt wird, wenn sich die LED nicht mehr im Betriebszustand befindet.

3. Einrichtung nach Anspruch 2,
**dadurch gekennzeichnet, dass** die Verbindung durch eine Sicherung (5) gewährleistet wird.

4. Einrichtung nach Anspruch 3,
**dadurch gekennzeichnet, dass** die Sicherung (5) von einer Signaldiode (6) gebildet ist.

5. Einrichtung nach Anspruch 4,
**dadurch gekennzeichnet, dass** eine Diode (7) zum Bilden einer Kompensation und zum Verhindern eines Stromdurchflusses durch die Basis des Transistors vorgesehen ist.

6. Einrichtung nach einem der Ansprüche 3 bis 5,
**dadurch gekennzeichnet, dass** die Sicherung (5) ständig von einem Polarisationsstrom des Transistors (2, 15) durchquert wird, der von einer Verzweigung auf eine höhere oder niedrigere Stufe stammt.

7. Einrichtung nach einem der Ansprüche 3 bis 6,
**dadurch gekennzeichnet, dass** die Spannungsdetektion an den Klemmen einer LED (L0, L1,...Ln) mit einer Zener-Diode (9) derart erfolgt, dass beim Durchbrennen der LED die Klemmenspannung dieser LED die Zener-Spannung übersteigt und der Strom, der die Zener-Diode (9) durchfließt, eine Stärke hat, die höher ist als die durch die Sicherung (5) zugelassene, wodurch deren Bruch bewirkt wird.

8. Einrichtung nach Anspruch 7,
**dadurch gekennzeichnet, dass** eine Leckstromschutzdiode (10) vorgesehen ist, um zu verhindern, dass der Polarisationsstrom über die Zener-Diode (9) zurückfließt.

9. Einrichtung nach einem der Ansprüche 2 bis 8,
**dadurch gekennzeichnet, dass** sie n+ 1 LEDs in Reihe geschaltet umfasst, denen n+ 1 Stufen (von 0 bis n) entsprechen, wobei die Transistorschaltung jeder Stufe, die den LEDs 0 bis n-1 entspricht, einen Transistor (2) vom Typ npn aufweist, und die Polarisation der Basis (3) bezüglich des Emitters (4) ausgehend von der höheren Stufe erzielt wird, und bei der letzten Stufe (LED Ln) eine Schaltung mit einem Transistor (15) vom anderen Typ pnp vorgesehen ist, wobei die Polarisationsspannung dieses pnp-Transistors vom Emitter des Transistors der niedrigeren Stufe (LED Ln-1) abgegriffen wird.

10. Einrichtung nach einem der Ansprüche 2 bis 10,
**dadurch gekennzeichnet, dass** die Transistorschaltungen in integrierter Form ausgeführt sind.

11. Einrichtung nach einem der vorhergehenden Ansprüche,
**dadurch gekennzeichnet, dass** sie einen Gleichspannungs-Gleichspannungsaufwärtswandler (23) umfasst, mit einer Ausgangsspannungssteuerung in Abhängigkeit von der in den LEDs fließenden Stromstärke zur Durchführung einer Stromregelung, wobei das Steuersignal an den Klemmen eines Widerstands (24) abgenommen wird, der mit den LEDs in Reihe geschaltet ist.

12. Leuchtvorrichtung für Kraftfahrzeuge, wie etwa ein Scheinwerfer oder eine Signalleuchte, mit mehreren in Reihe geschalteten Leuchtdioden,
**dadurch gekennzeichnet, dass** sie eine Einrichtung zur elektrischen Stromversorgung nach einem der vorhergehenden Ansprüche umfasst.

13. Vorrichtung nach Anspruch 12,
**dadurch gekennzeichnet, dass** sie zehn in Reihe geschaltete Leuchtdioden umfasst.
